# EUROPEAN PATENT APPLICATION

(11) **EP 4 822 631 A1**
(43) Date of publication of application: **14.10.2026**
(21) Application number: 25169084.8
(22) Date of filing: 08.04.2025
(51) Int. Cl.: G06Q 20/38, G06Q 20/40

(54) **CRYPTOGRAPHIC CREDENTIALS FOR DIGITAL TRANSACTIONS**

(71) Applicant: Mastercard International, Inc., Purchase, NY 10577 (US)
(72) Inventor: COLLINGE, Mehdi, 7141 Mont-Sainte-Aldegonde (BE)
(74) Representative: Keltie LLP

(57) **Abstract**

A method of authorising a transaction using a payment network is described. A token for the transaction, associated with a payment account, is determined. At a node in the payment network, a succession of time steps are established. The transaction is performed, using the token. For this, a dynamic transaction credential is obtained from the node in the payment network. This dynamic transaction credential is determined by the time step in which the dynamic transaction credential is generated. The transaction is provided to the payment network for authorisation. The dynamic transaction credential is validated in the payment network by determining the time step in which the dynamic transaction credential was generated. Methods of validating such a credential are also described, in particular such that a plurality of candidate values for the credential can be evaluated in a single process. Computer systems adapted to perform such methods are also described.

## Description

### Field of Disclosure

The present disclosure relates to cryptographic credentials for digital transactions. In aspects, this disclosure relates to how they may be created, used and managed for particular use contexts, and also to associated computational systems.

### Background to Disclosure

Complex data processing systems involving multiple entities linked by one or more networks typically require specific protocols for communicating data to ensure that the data is properly recognised and processed throughout the system. These protocols will typically place particular requirements on the different entities in the system, and they will typically develop over time to provide new capabilities and to reflect new technical developments.

It will typically not be practical to upgrade every entity in a distributed system of this type to support every capability of a new version of a protocol as soon as it is established. This is addressed by providing backwards compatibility in new versions of such protocols, so that it is possible to provide continued function using a more restricted set of capabilities than would be needed for full implementation of a latest version of a protocol. An example of this approach is in cellular communication standards - where a part of the system is not adapted to support 4G, backwards compatibility in the protocols allows use of 3G, EDGE or GPRS.

The implementation of transaction schemes has a similar issue. An extended infrastructure connects banks, merchants and cardholders through a series of different networks with a transaction scheme infrastructure mediating the authorisation of a transaction and settlement and clearing processes. The transaction scheme infrastructure itself will be adapted to implement a latest version of a protocol, but particular system elements - for example, the computing hardware of a merchant processing a transaction - may not be. This may require the constraints of an older version of the protocol to be adopted - these may for example include using a limited number of data fields because of significant constraints on the transmission of data in earlier versions of a protocol.

A new architecture has been developed to allow decentralized processing of digital transactions - this is described in, for example, the applicant's earlier European Patent No. 3748525. This enables decentralized generation and validation of credentials for digital transactions to allow such transactions to be authorized in a timely manner even as the number of overall transactions increases.

It is desirable for such an architecture to operate for all types of digital transaction so that multiple systems do not need to be maintained. However, the types of legacy issue indicated above, requiring backward compatibility with systems using protocols requiring limited processing or involving limited data handling, pose a challenge for such architectures in trying to support such digital transactions. This can become even more challenging if time constraints are provided for the performance of the transaction. It would be desirable to address these issues effectively so a wider range of digital transactions can be performed over a decentralized digital transaction processing architecture.

This may be problematic if enhancements to the protocol are for reasons fundamental to the effective technical operation of the system. One such reason may be system security - if an older version of a protocol provides unsatisfactory security, it may be strongly desirable to find a new approach that successfully addresses security concerns - in, for example, secure transmission of data or secure authentication of a user - while still observing the constraints required in older versions of the protocol as these are built in to the implementation of particular system elements. In the case of a transaction scheme, an older version of a protocol may for example only be adapted to identify particular elements of a payment card in a transaction (the PAN - Primary Account Number - the expiry date, and the CVC2 code). It would be desirable to address security concerns addressed by more advanced versions of a protocol, while maintaining the constraint that the older protocol imposes on the amount of communicable card data. It would be desirable to do this in such a way that requirements of the transaction scheme - for example, in allowing transaction details to be validated for up to 24 hours after they have been generated - can be met.

### Summary of Disclosure

In a first aspect, the disclosure provides a method of authorising a transaction using a payment network, comprising: determining a token for the transaction associated with a payment account; at a node in the payment network, establishing a succession of time steps; performing the transaction using the token and obtaining a dynamic transaction credential from the node in the payment network, where the dynamic transaction credential is determined by the time step in which the dynamic transaction credential is generated; and providing the transaction to the payment network for authorisation, wherein the dynamic transaction credential is validated in the payment network by determining the time step in which the dynamic transaction credential was generated.

In embodiments, a duration of a time step may be a fixed value. This duration may generally be between one minute and six hours, whereas in particular embodiments, the duration of the time step may be between 15 minutes and 30 minutes.

In embodiments, the dynamic transaction credential may be a card verification code.

In embodiments, the dynamic transaction credential may be obtained by a cryptographic process using a cryptographic key, where the cryptographic key is selected from a key list using a deterministic process using an input derived from the token. This input derived from the token may be a Luhn code of the token.

In embodiments, the method may also comprise obtaining an additional dynamic transaction credential comprising a dynamic expiry date, wherein the dynamic expiry date may comprise encoded information and has a value determined not to conflict with a value of a static expiry date of the token. In such a case, the encoded information may comprise one or more of a node identifier for the node where the dynamic transaction credential was generated, a key list identifier for the key list used to generate the dynamic transaction credential, and a date control field. A predetermined mask may be used to obfuscate the value of the encoded information.

In a second aspect, the disclosure provides a method of validating a credential using a cryptographic process, wherein the credential is one of a plurality of credentials generated, wherein each credential generated is associated with a value in a sequence; identifying a plurality of candidate values in the sequence such that one of the candidate values will be the one of the candidate values associated with the credential to be validated; obtaining information needed to generate the credential for each of the plurality of identified candidate values in the sequence; using a single cryptographic process, generating the credential for each of the candidate values in the sequence; and determining which of the candidate value credentials is the credential to be validated, and validating that credential.

In such a case, the sequence may comprise a plurality of time steps, and the value in a sequence may be a value of a time step. In such a case, after obtaining information needed to generate the credential for each of the plurality of identified candidate values in the sequence, the information for each identified candidate value may be provided as a block of predetermined size using a predetermined one-way process. If this is done, the single cryptographic process may comprise a block cipher in which the blocks are not chained. This may be a block cipher is adapted to support ECB mode, and the block cipher may be one of AES ECB and SM4 ECB. Using this approach, the information for each candidate value may comprise a token performing the transaction and a counter value derived from the time step value.

In a third aspect, the disclosure provides a method of authorising a transaction using a payment network according to the first aspect, wherein validating the dynamic transaction credential comprises validating a credential according to the method of the second aspect. In such a case, generation of the dynamic transaction credential may comprise the same cryptographic process as determining the credential for a single candidate value of the plurality of identified candidate values.

In a fourth aspect, the disclosure provides a computer system comprising one or more processors and memories, wherein the computer system is programmed to perform the steps performed by a node of a payment network for any one or more of the first aspect, the second aspect, and the third aspect. In such a case, the computer system may further comprise one or more hardware security modules storing cryptographic keys for use by the computer system.

### Description of Specific Embodiments

Specific embodiments of the disclosure are now described, by way of example, with reference to the accompanying drawings, of which:
Figures 1A and 1B show schematically in general terms approaches adopted in embodiments of the disclosure in addressing technical issues relating to achieving effective creation and validation of cryptographic credentials for transactions despite severe systemic restraints;
Figure 2 shows schematically a distributed transaction architecture using a four-party model;
Figure 3 illustrates elements of a complex distributed system adapted to implement the transaction architecture of Figure 2;
Figure 4 shows schematically an exemplary system for enabling digital transactions in the transaction architecture of Figures 2 and 3;
Figure 5 illustrates schematically an arrangement for a distributed system for digital enablement of transactions;
Figure 6 illustrates a computing node of the arrangement of Figure 5 in more detail;
Figure 7 illustrates elements within the computing node of Figure 6;
Figure 8 illustrated key management in the computing node of Figure 6;
Figure 9 illustrates a type of digital transaction to which embodiments of the invention are relevant;
Figure 10 illustrates an approach to management of a local transaction counter in embodiments of the disclosure;
Figure 11 shows an exemplary approach for generating a password in an HOTP arrangement;
Figure 12 shows an approach according to an embodiment of the disclosure for determining multiple credentials using a single cryptographic operation;
Figure 13 illustrates specific steps in the generation of individual credentials in the embodiment of Figure 12;
Figure 14 illustrates principles to be followed in generating a dynamic expiry date according to an embodiment of the disclosure; and
Figure 15 illustrates an approach for generating a dynamic expiry date for use in embodiments of the disclosure.

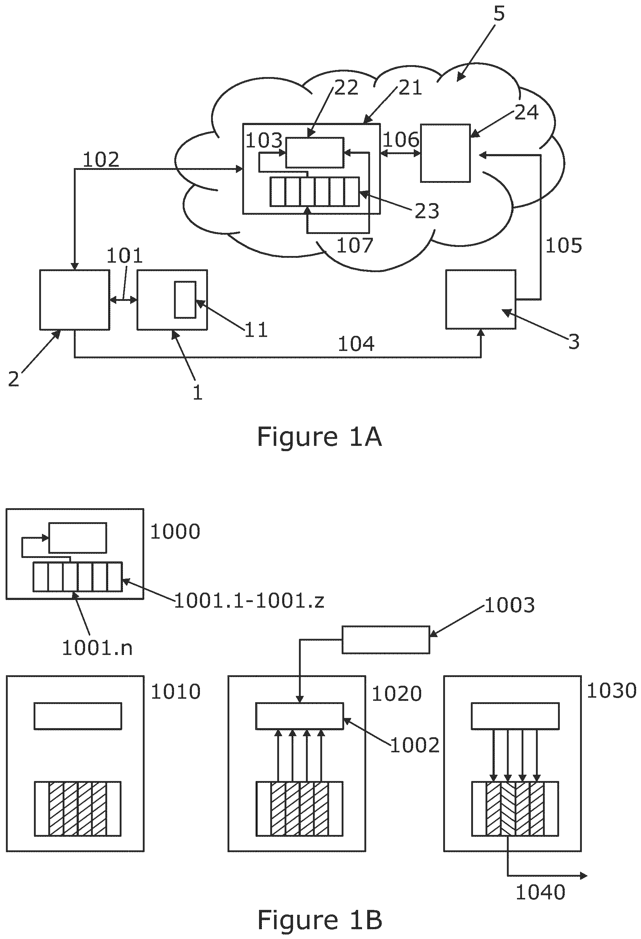

Figures 1A and 1B illustrated related approaches each used in certain embodiments of the disclosure and both directed to addressing technical issues used by solutions to the technical problems indicated above.

Figure 1A illustrates basic principles of a sequence-based approach to generation and validation of a credential, in this case based on a series of time steps. A transaction 101 is performed between on the one hand (in practice, this may be on behalf of) a cardholder 1 and on the other hand a merchant 2. Here, the transaction is performed using a token 11 representing a payment account of the cardholder 1.

A credential for the transaction is obtained 102 from a node 21 of a payment network 5. The node 21 has a processor 22 adapted to generate a credential for the transaction, which it does with reference 103 to the time step in which it is asked to generate the credential from a series of time steps 23 determined at the node 21. When the transaction is forwarded 104 for authorization (here via an acquirer 3 for the merchant 2), it is passed to a relevant service 24 in the payment network 5 for processing, where the credential is validated 106 by determining 107 in which time step the generation of the credential was carried out.

Figure 1B illustrates basic principles for efficient validation of a credential when the credential may be one of a small number of credentials created using a sequence-based approach. Prior to this validation, the credential will have been generated 1000 using a sequence value 1001.n - in this case, this may be a time step - from a series of sequence values 1001.1 to 1001.z.

In validation, the first action is to identify 1010 possible candidates for the sequence value/time step - this method is particularly appropriate when the candidates can be limited to a small finite number. Here, the candidates identified are 1001.n-1, 1001.n, 1001.n+1 and 1001.n+2. Then, all the information needed to generate credentials for each of the plurality of identified candidate values in the sequence is provided 1020 (this may be, for example, from within a transaction processing system 1003 in this case, but may be a different type of source for other types of embodiment) to a single cryptographic process 1002, which then generates 1030 the credentials for all the identified candidate values in the sequence, after which the correct sequence value and hence credential can be determined 1040 and validated.

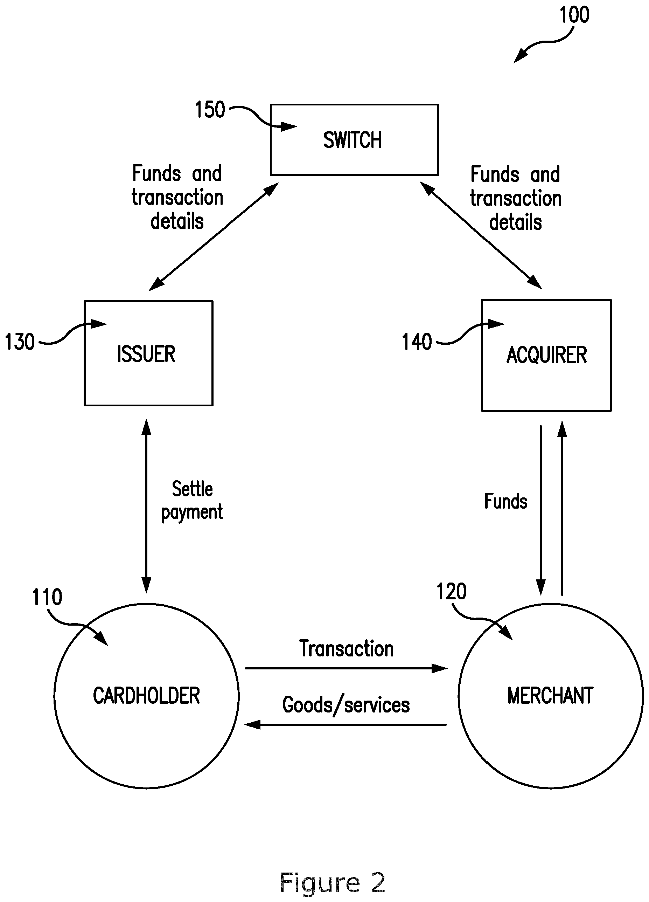

Embodiments will be described in more detail in the context of a transaction scheme. A suitable transaction scheme and infrastructure will first be described in more detail. Figure 2 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of an online transaction). Once the additional verification process is complete the transaction is authorized.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

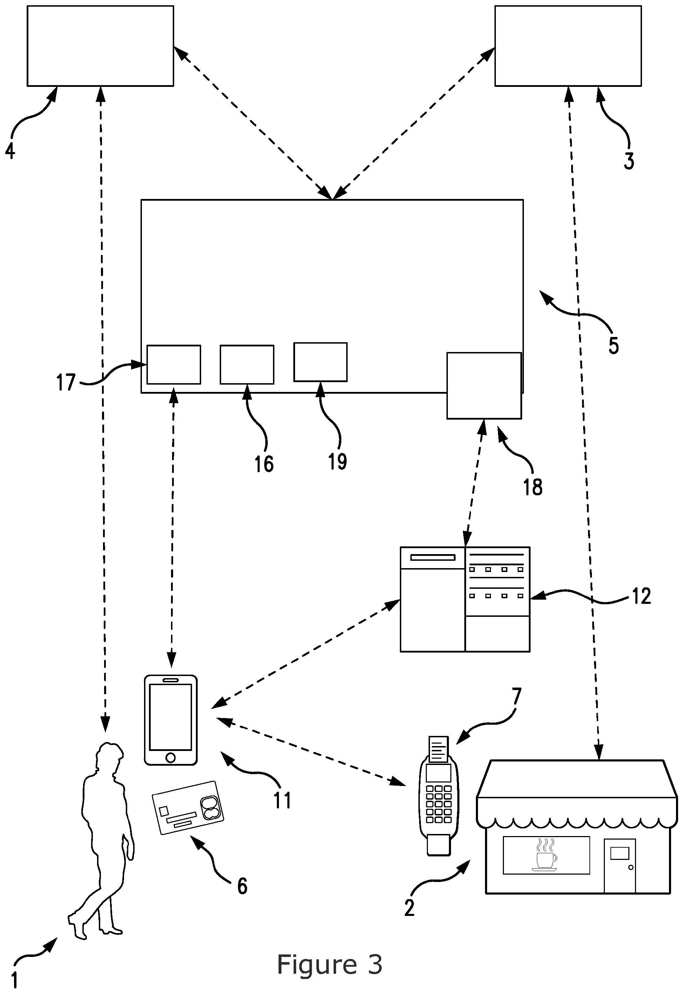

Figure 3 shows an architecture according to an embodiment of the disclosure appropriate for interaction between a cardholder and a merchant. This Figure shows a general-purpose architecture for reference, but it shows elements of an architecture used when a cardholder carries out an online transaction with a merchant server. Specific embodiments described in detail below relate primarily to digital transactions, and a specific architectural context will also then be described.

For a conventional transaction, a cardholder will use their payment card 6 - or a mobile computing device such as smartphone 11 adapted for use as a contactless payment device - to transact with a POS terminal 7 of a merchant 2. However, in embodiments relevant to the present disclosure, the cardholder may use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use this to transact with a merchant POS terminal 7 using NFC or another contactless technology, or to make a payment in association with its wallet service as discussed below. However, online transactions with a merchant are of particular interest in connection with embodiments of the disclosure, rather than contact or contactless transactions with a merchant POS terminal 7. To make an online transaction, the smartphone 11 may also be able to interact with a merchant server 12 representing the merchant 2 over any appropriate network connection, such as the public internet - the connection to the merchant may be provided by an app or application on the computing device.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet based transactions for processing by the transaction infrastructure. In other embodiments, the wallet service 17 may be provided similarly by a third party with an appropriate trust relationship with the transaction scheme provider. To support tokenization, a token service provider 19 may be present (again, this is shown as part of transaction infrastructure 5 but may be provided by a third party with appropriate trust relationships), and the transaction scheme infrastructure provides a digital enablement service 16 to support the performance of tokenized digital transactions, and to interact with other elements of the system to allow transactions to be performed correctly - this digital enablement service may include other elements, such as token service provision.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

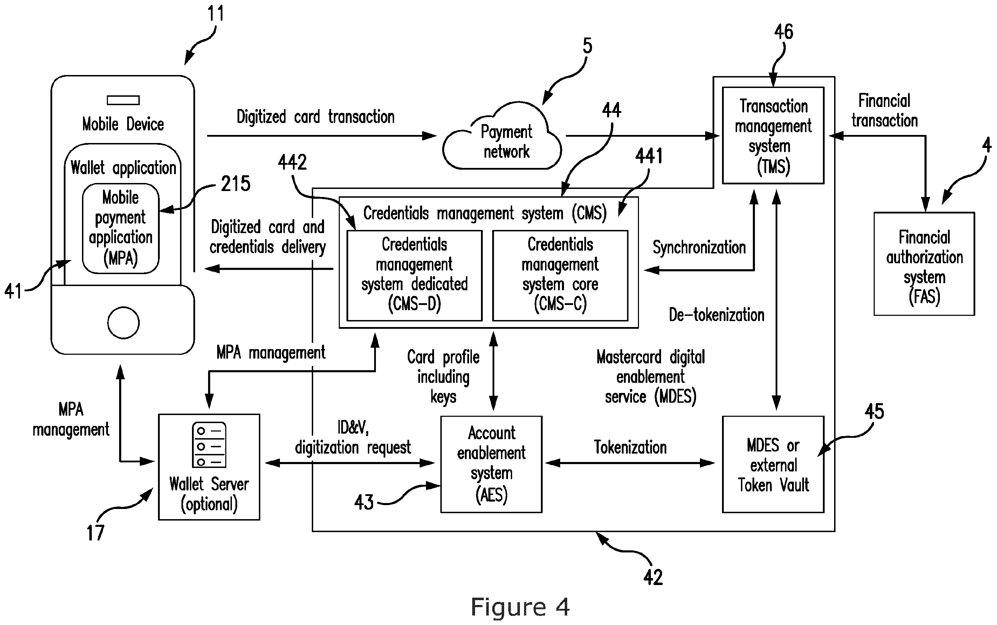

Figure 4 shows elements of a transaction infrastructure to support digitized payments from a mobile device in more detail. This Figure shows as a specific example the applicant's Mastercard Cloud-Based Payment (MCBP) architecture - this is exemplary rather than specific to the invention, and illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenized transactions so that they can be processed through the transaction scheme as for conventional card transactions.

The following functional elements shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitisation and user establishment. It will interact with the mobile payment application (here through the wallet server 17) for card digitisation requests and will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45, and tokenization of a card will result in creation of a new entry in the Token Vault 45.

Transaction Management System (TMS) 46 is used when processing tokenized transactions. If a transaction is identified by the transaction scheme as being tokenized, it is routed to the TMS 46 which detokenizes the transaction by using the Token Vault 45. The detokenized transaction is then routed to the issuer (here represented by Financial Authorisation System 47) for authorisation in the conventional manner. The TMS 46 also interacts with the CMS 44 to ensure synchronisation in relation to the cardholder account and credentials.

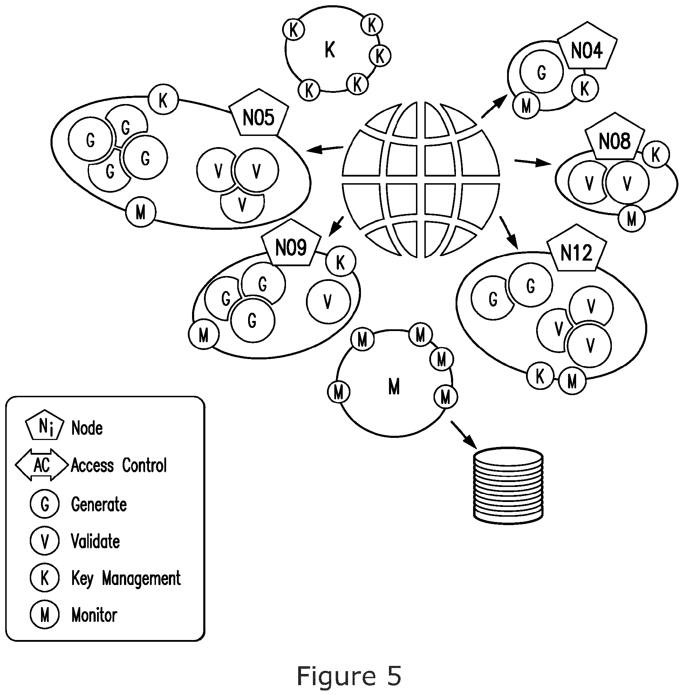

A new form of decentralized architecture for digital transactions has been proposed, and this is described in the applicant's European Patent No. 3748525. Embodiments of the disclosure may also be performed on such a decentralized architecture for performing digital transactions, involving a decentralized set of nodes each capable of credential management, as is shown in Figures 5 to 7.

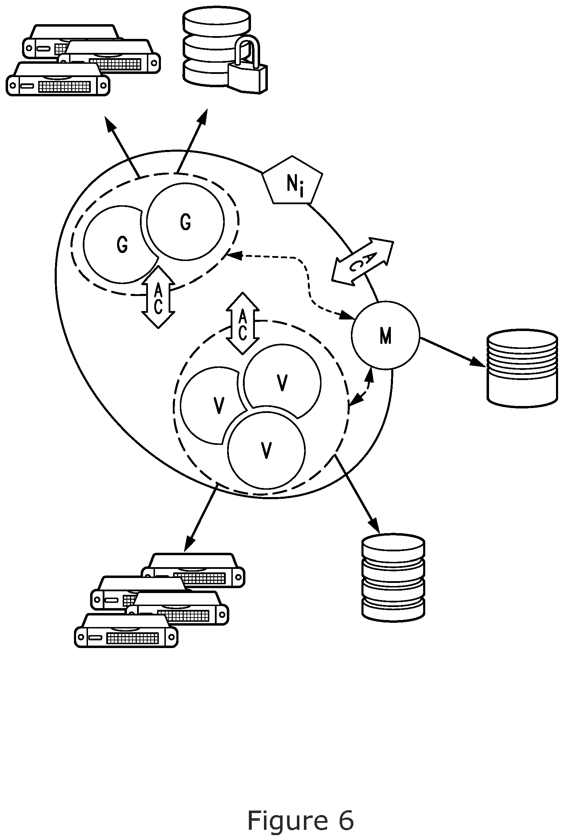

Figure 5 shows a decentralized system of computing nodes Nx, each capable of generating G or validating V credentials, or of performing both services. Figure 6 shows a single such node in more detail. These credentials can be valid across the whole system (unless restricted to some nodes as result of on-soil regulation or the like), and in this case are associated with transactions for a set of users (clients) whose transactions are routed to that node, typically through geographic proximity. Nodes provide credential generation G and credential validation V as services to clients, and need to be able to generate the credentials securely and validate them securely while they are valid at least. In the architecture shown, credentials are not stored - they are generated on request and validated on the fly. As Figures 5 and 6 show, in addition to credential generation and validation, key management K and monitoring M can be considered as services both locally at a node and across the system, and access control AC will typically be required to allow access to a service.

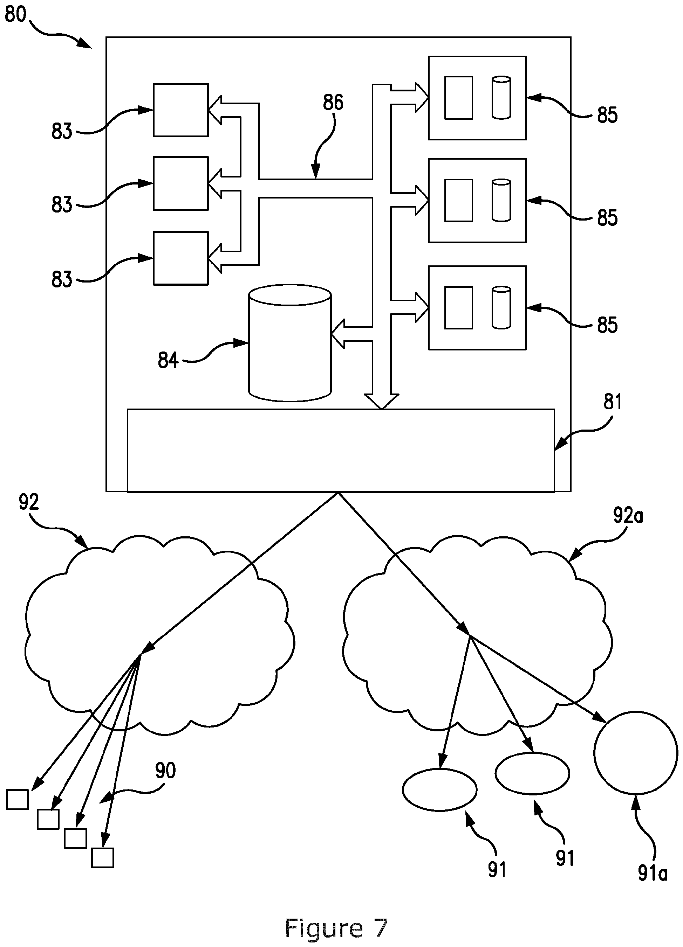

Elements of a suitable computing node are shown in Figure 7. The node 80 comprises at least one networking connection 81 to allow communication to clients 90 and other nodes 91 as well as (in this example) a central node 91a coordinating activities between one or several nodes. Communication is shown here as being through separate networks to each set of other parties - through a first network cloud 92 for connection to clients 90, and a second network cloud 92a for connection to other nodes 91 within the distributed system. This reflects that these networks may be physically different, or may have different security requirements and protocols.

The node 80 contains a plurality of conventional servers 83 (which will contain their own processors and memories - not shown - along with other components as would normally be found in a server) and a memory 84 containing a central database. Also comprised within the node 80 are a plurality of hardware security modules 85 (HSMs), adapted to hold cryptographic material and to perform cryptographic functions securely. Here elements within the node 80 are shown communicating by means of a bus 86. While the node 80 in this case is represented as a single data center, this is not required - the "bus" may be, for example, comprise a dedicated network connection between a group of related data centers that allows them to provide a real-time response such that they will appear to other entities communicating with the node to be part of an integrated whole.

Existing procedures for credential management in payment systems are centralized - any request to create or validate credentials results in a query to a centralized system. For a payment system implementing EMV standards, credentials are generated using keys derived according to a hierarchical process. Issuer Master Keys (IMK) are associated with a specific range of tokens, and keys for use for credentials are derived hierarchically (Card Master Keys - CMK - from IMK, and then Session Keys - SK - from CMK). This approach is used for devices, such as physical cards, but is also used for digital transactions. The number of digital transactions is increasing extremely rapidly, as opposed to device-based interactions where the growth is more consistent with resources.

In the digital ecosystem, while there is very rapidly increasing demand, there is also generally a more secure environment, as the interaction is typically between merchant systems (or payment service providers) and the transaction system over secure pathways between well-identified participants. There are thus interactions that may require multiple cryptographic operations for security in a device context that can be streamlined when delivering services in a server context when exposing API to access the services while keeping all the assets secure in a constrained environment including key management and cryptographic operations.

While it may appear desirable to scale a transaction system for performing digital EMV transactions by using a set of distributed servers to generate and validate credentials, it is found that this approach does not scale. The overall level of key generation would not be changed, but the amount of messaging within the system would be very greatly increased, as an extremely large number of tokens would need to be managed, and replicated. Processing would be demanding and also extremely expensive, as existing EMV key generation approaches require customized rather than off-the-shelf Hardware Security Modules (HSMs), and data storage and particularly network latency would become impossible to manage problems.

In conventional arrangements, the device security model is also used for fully digital transactions. This security model involves Issuer Master Keys (IMKs) being stored in the transaction system HSMs and used to derive Card Master Keys (CMKs) from the relevant IMK and a card PAN (Primary Account Number). These CMKs are then stored in a device (typically a Secure Element or substitute technology). When using software-based solutions to generate transaction credentials using a mobile device, a Session Key (SK) is generated using the relevant CMK and an ATC (Application Transaction Counter) for the card/device - this is currently generated by the Credentials Management System (CMS) as shown in Figure 4. At present, all tokens, even for fully digital transactions, are bound to this IMK/CMK/SK derivation. This also applies for transaction credentials generated by server through API exposed by the transaction system for remote payment transactions.

While the term PAN is generally used below, in the context of digitized transactions it is also appropriate to use the term TUR (Token Unique Reference) to refer to a unique identifier for a card or account. Literally, the terms should be used as follows where it is desired to distinguish one from the other:
- PAN is a value associated directly with an account - this is the normal (numerical) way to identify the account - the term FPAN or Funding PAN may be used to indicate a reference to an account with an issuing bank;
- TUR or "token unique reference" is a value allowing the identification of a token without exposing any PAN value, there being a mechanism within the transaction system to determine which PAN is associated with a TUR.

However, when the term PAN is used below, it should be understood that this is used in the broad sense of an identifier that may be associated with an account that identifies it - and so use of PAN below may encompass TUR.

The conventional approach requires a very heavy management load for keys, which is not appropriate for fully digital transactions. Generation of SKs, and hence Application Cryptograms (AC - a standard mechanism in EMV transactions) requires multiple cryptographic operations, not all of which can be carried out by a conventional off the shelf HSM, so bespoke HSMs are required. Massive distribution of keys across the system is required so that performance of a transaction can be supported wherever it occurs and ATC management is complex. It would be desirable to use standard HSMs, avoid massive key replication while having keys directly available for use, and to be able to provide a solution that limits the number of HSMs overall (as these typically support only a few thousand keys).

Much of this security is to provide assurance of security even if there is the possibility of compromise at a system endpoint (for example, at the cardholder device). The main purpose of the cryptographic function is to provide a guarantee - this covers both integrity of the data and authentication. The transaction related data protected by a cryptographic data includes identification of a transaction and the associated token, along with an indication of any cryptographic processes used and any relevant financial data (along with any other aspect of the transaction that needs to be guaranteed). This is represented by a transaction credential - this needs to be generated G and subsequently validated V, with these processes being monitored M to ensure overall system integrity and supported by a key management system K of some kind. In the case of a fully digital transaction, these processes take place in a constrained environment where endpoint security is not an issue in the same way as with devices. In this domain the token does not reach either of the endpoints of the conventional transaction management system - the cardholder or the issuer. Instead, it operates across a merchant system or a payment service provider (PSP) and transaction scheme provider.

This approach allows for decentralization of the credential system from a complex central server into a number of nodes providing services. These nodes will typically be geographically distributed, but may extend over a number of data centres (for example, by use of a cloud infrastructure to achieve data sharing within a node). These nodes provide services - in relation to credentials, a generation service G and a validation service V - with defined rules for access control to the services. The merchant or PSP communicates with the generation service G to obtain credentials, which are then used in a standard authorisation process, with the validating service V being called upon where necessary to validate the credential. These services have access to the computing infrastructure (HSMs, databases) of a node. Monitoring M and key management K services are also provided - these may be centrally organized or comprise a mix of coordinated and local functionality.

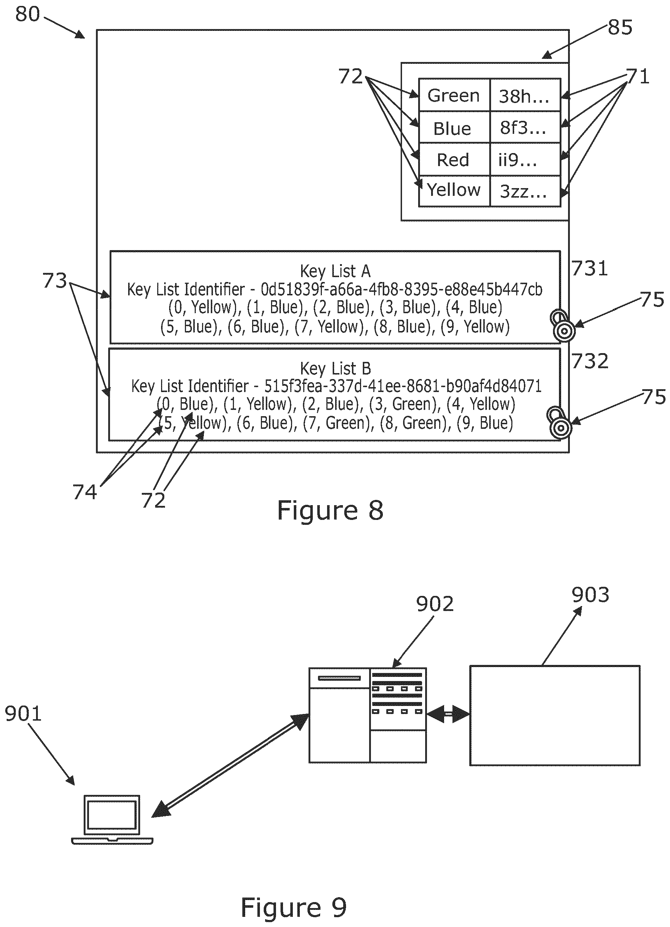

Handling of keys for nodes will now be described with reference to Figure 8. For each node, the generation G and validation V services have access to a pool of HSMs - in Figure 8, one HSM 85. The HSMs contain keys 71 that are each uniquely identified by a set of key identifiers (Keyld) 72. Keyld 72 may be a label, a value, an explicitly unique value such as a UUID, or anything else with appropriate properties. In Figure 8, for convenience, these are shown by colour names. These Keylds 72 are stored for use by the node in uniquely identified (Identifier) key lists 73 - these key lists 73 provide a list of relationships between an identifier (Id) 74 and a stored key (Keyld) 72. The identifiers (Id) 74 are what will be determined by the deterministic process in order to establish what key is to be used, as will be described further below. The integrity of each key list may be guaranteed using a seal (Seal) 75 - if the key lists are provisioned from a central location, this may be applied by a trusted party associated with that central location. Several other distribution models can be supported using for example a trusted party being a local functionality instead of a central location. A node will typically have a number of key lists 73 available, but with only one active for generating credentials (G) at a given time - it will however generally be necessary for the validation service (V) to be able to access any key list 73 that may be associated with a credential that is still valid. Key rotation in this approach is extremely straightforward - it may simply involve replacement of the active key list with another key list. It is however very straightforward to tell which Keyld 72 is needed to validate a credential - it will be determined fully by the node identifier and the reference 76 of the key list. That information is part of the credential and is used as input to the deterministic process to pick a key from a list of keys.

At any given point in time, these services G will be required to use a given key list - say Key List A 731 in the first instance, so relevant keys must be loaded in the HSMs used by the generation services G. After the expiry of a period of time, the key rotation process may for example mandate the use of Key List B 732, which may require new keys which would need to be loaded in the relevant HSMs if not already present. The specific key to be used is selected from the key list 73 by the deterministic process - this will typically give a different result after key rotation, but this is not inevitably the case. While the generation services G do not need Key List A after key rotation, the validation services V still do - they require access to any key list that relates to a potentially valid credential. The validation services V must be able to establish exactly which key was used to generate a credential by the generation services G in order to validate a credential.

As previously noted, digital transactions such as those made in online commerce are of particular interest. Figure 9 shows this specific case. In online commerce, a consumer will typically be interacting through their computing device 901 with a merchant server 902 through a website over the browser (or a specific app) on the user's computing device 902. In the conventional case, the user will use their credit card for a transaction, but the card will not be present and the consumer is here not transacting through a payment application on their own computing device but is using the payment card in a manner similar to a conventional "cardholder not present" (CNP) transaction, in which the merchant receives specific details of the payment card, but will not receive an application cryptogram generated by the payment card itself, or by a payment application on a user computing device. In such cases, cardholder authentication is normally handled by a separate mechanism such as 3DS (a version of 3-D Secure, discussed for example at https://en.wikipedia.org/wiki/3-D_Secure, which has been developed to be suitable for use for cardholder authentication in Card Not Present (CNP) transactions). The merchant server 902 is here shown as connecting to the payment network 903 for processing of the transaction. For an initial transaction between the cardholder and the merchant, the cardholder will be fully involved in providing transaction details (as is generally the case for a Cardholder Initiated Transaction - CIT). Repeat transactions for the same consumer may require more limited interaction between cardholder and merchant, with the transaction details being provided by the merchant (a Merchant Initiated Transaction - MIT).

Where the merchant server - or their payment service provider (PSP) - is adapted to support a full contemporary transaction processing solution for online commerce such as Secure Remote Commerce (SRC - https://www.emvco.com/emv-technologies/secure-remote-commerce/), which is a set of specifications developed by or for EMVCo that provide a secure approach to the processing of e-commerce transactions. Using SRC, a transaction may be performed using a token (managed originally by an architecture as shown in Figures 3 and 4) rather than a PAN and with a rich set of transaction-related data, including dynamic elements varied with each transaction. Many merchant servers and even PSPs are however adapted only to use a limited set of card data - the PAN, the expiry date, and the 3-digit CVC field.

As shown in Figure 9, it would be desirable for these remote transactions to be supported by a decentralized node-based ("NODES") architecture of the type shown in Figures 5 to 8, rather than the conventional centralized approach shown in Figures 3 and 4. Where there is a rich set of card data that can be provided - typically from the user device - this is reasonably straightforward. However, when there is the limited set of card data indicated below acceptable to merchant servers and PSPs, this is more challenging. This is because the available space for any cryptographic solution is very small, increasing the risk of exposure to third-party attack and therefore requiring one or more additional mechanisms to combat it. A server-side token may be created for use in identifying the transacting parties (this may, for example, relate to a specific user interacting with a specific merchant), but it may be undesirable to use this token with a fixed security mechanism for a long period, particularly if there are very few data fields available for cryptographic use.

Embodiments described below will provide practical solutions to this issue. First of all, the problems associated with this use case will be described in more detail. For security, it would be strongly desirable to find a dynamic solution rather than rely on a static code, such as the conventional 3-digit CVC2 field. Payment solutions are generally migrating towards the use of dynamic data rather than static data for security, as this means that third-party exposure to credentials does not create a risk for an indefinite period of time. Moreover, where the number of digits used for security is small, it becomes desirable for the length of time where such a credential is valid (and therefore an exposure risk) to be made small. In the existing NODES model, there is no such time limitation - though time of generation may be noted in order that the same cryptographic process can be followed for validation as for generation. Here, it would be desirable to provide use for only a limited period of time, much more akin to use of a one-time password. One strategy would be to allow the generation of a limited number of credentials in a period of time, and for these to be valid for a limited period of time - for example, generation of one or two transaction credentials for a given token within (say) a 15 or 30 minute window, with an allowed time between generation and validation of up to 60 minutes.

Using such a model, the processes of generation (G) and validation (V) of a credential are essentially independent of each other, so mechanisms for management of the transaction (transaction identification, the proof of payment process, and replay detection) need to be present. In doing this, performance is an issue, and there is a significant computational cost to calling any cryptographic engine - so it would be desirable to provide a mechanism that minimised the number of cryptographic engine calls. Moreover, any solution needs to be distinguishable from other transaction types - for example, if the expiry date field is to be used to provide a dynamic expiry date, it needs to be readily possible to distinguish such a dynamic expiry date from a conventional static expiry date.

As indicated above, this suggests a solution akin to a one-time password. These have been standardised in a couple of ways - HOTP (HMAC-based one-time password), based on an event counter, is standardised in RFC 4226; and TOTP (Time-based one-time password), based on a clock, is standardised in RFC 6238. These define one-time password mechanisms delivering user-driven authentication interactions suitable for integration in other processes. These are typically used for generating 6 to 8 digit single values expected to be valid for a short time window, typically 30 seconds. There are a number of ways in which such a solution is not directly suitable for a transaction context: there is (unless significant repurposing takes place) only a 3-digit CVC field available, there may be multiple transactions generated during what for HOTP/TOTP would normally be a time step exclusive to one password event, and systemically a longer delay would be required than a 30 second window between credential generation and validation.

If a solution is to be found based on use of a 3-digit CVC field, this needs to be robust against the risk of a guessing attack (in which an attacker uses all available strategies to present a rogue transaction using a guessed 3-digit value in the hope that one succeeds and the transaction is approved). When so few digits available, preventing guessing attacks and ensuring that transactions are correctly identified for validation provide a composite challenge.

This requires a different approach to the standard use cases for NODES, as discussed in, for example, the applicant's earlier application published as WO2022/046330. While this involves time-based changes such as weekly key list rotation, it also involves unique identification of transactions (without need for guessing or retry) and typically supports up to 16,000+ transactions per week for a particular token and key list combination. Moving from this type of solution to a more OTP-like approach with short validation windows is clearly challenging.

Elements of a basic embodiment will now be described following the general approach indicated in Figure 1A, followed by elements of an extended embodiment allowing for additional functionality at some additional cost.

For the basic embodiment, only the 3-digit CVC field is used to provide a cryptogram. This will allow for an undisrupted transaction flow. The static expiry date is used (in EMV terms, the DE14 field is populated with the static token expiry date) and not repurposed - this reduces the amount of information that can be used, but allows for the simplest processing as a result. A fixed time step is used (e.g. 30 minutes) with only one CVC value generated in this time step. Validation can occur over a slightly longer period (e.g. 60 minutes) but not much longer, both for security and to provide a simple manageable solution. Using this approach, there is no space available for node identification, so this would have to be addressed by ensuring that generation and validation occur together or that all nodes act in the same way. The time step would be used to determine the active key list. In existing NODES, the local transaction counter (LTC) is used to identify which key from the key list is to be used - in determining the active key for a time step, a different approach needs to be taken to ensure that the key used for generation is also used for validation. As the tokens themselves have a short life, an effective approach is simply for a key to be determined by token, for example by using the Luhn number to determine the key from the key list.

In enhanced approaches in which, for example, a dynamic expiry date is used to release more data fields, more functionality can be provided at more computational cost. In an extended approach, more than one CVC can be generated per time step. and routing and/or token-related information can be used to determine the node to be used - keys can then be specific to a given node.

Where a dynamic expiry date is used, while this will enable additional bits to be used, there will also need to be a process to prevent confusion between the dynamic expiry date and a static expiry date. Obfuscation techniques may be used, both to conceal information and also potentially to provide this distinction by giving the dynamic expiry date values that are distinct from static expiry date values. Use of the expiry dates releases up to 6 bits of additional information, which could be used in the following ways:
- Additional information to identify a transaction - this could use one or two bits, and would support generation of more than one transaction credential during a time step;
- Dynamic node identification - this could use one bit, and could distinguish between generation by the payment network and generation by a local partner;
- Dynamic key list identification - this could use 1 bit for key list identification if more than the identified deterministic process was required;
- Date Control - two bits could be used for date control to prevent clashes with "old" transactions that had not been processed previously.

The basic process for key management is as indicated above - only one key can be used from the currently valid key set, determined in this embodiment by the Luhn number. For a determined node, this allows for segregation of keys, if required (this can be used, for example, if delegation to a specific partner is to be allowed for a given token) customisation of the key list values used in a particular time step can be provided for accordingly. Key lists will rotate over time, in the normal manner.

The time step takes a fundamental role in this process. It defines the key list to be used, and in effect takes part of the role of the local transaction counter (LTC) in transaction identification. Strictly speaking, the time step is here used to determine the LTC value.

The transaction data used for authorisation in such systems is, as indicated, the PAN, the expiry date, and the CVC code. In all the embodiments shown here, the server-based token takes the role of the PAN. In the basic embodiment, the CVC code is replaced by a new-type of cryptogram generated in a node using a currently active key list, with the token (here, the Luhn code) determining which key in the key list to be used. In the basic case, the expiry date is simply the static expiry date, but in extended cases, this is repurposed as a dynamic expiry date containing more information and enabling more capabilities.

It should be noted that there is certain information that is associated with the token that is not carried in the transaction flow - a significant role for such information is to ensure that the validation process works directly, and that no retry process is required. This can be achieved either by having a deterministic process with no need for retry as only one relevant result will be allowed - the approach taken in the basic case, where conflicting cases are prevented from arising at the generation stage and there is a strong linkage between generation and validation processes - or as there are mechanisms for distinguishing otherwise conflicting cases, which is the approach taken in the extended case, where bits from the dynamic expiry date field are used for this purpose.

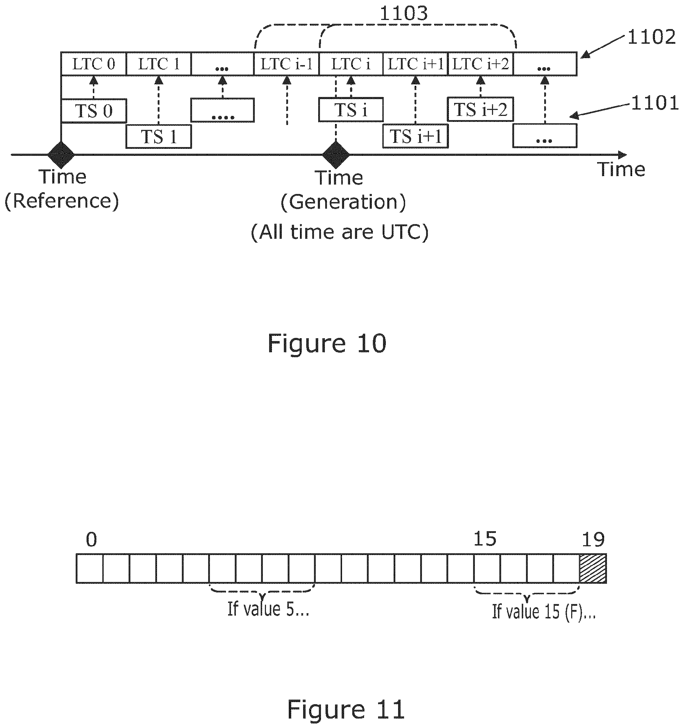

Specific features of embodiments (both basic and extended cases) will now be described by function. First of all, the use of time-based LTC management, relevant to each case, will be described with reference to Figure 10. As Figure 10 shows, time - which may simply be derived from UTC values - is divided for practical purposes into a series of time steps 1101, here identified as TS 0, TS 1 ... TS i ... and so on (in practice, there may be a reset at an appropriate point so that the value of i does not get too large). These time steps are of a fixed duration - the possibilities suggested here are 30-minute or 15-minute time steps, but other values are possible. TS 0 begins at an initial reference time, and Figure 10 shows a transaction taking place, with a credential being generated, during time step TS i. A value determined by TS i is now set as an effective LTC value - most simply, LTC=I - for the purpose of credential generation (and validation) - there being an effective LTC value 1102 for each of the time steps 1101. If - say - validation is only to occur within a 30-minute period for a 15-minute time step, then it is appropriate for there to be four, at most candidates 1103 for LTC value at validation - these will be TS i, TS i+1, TS i+2, and also TS i-1 (to account for possible desynchronisation).

The reference time can be defined in the transaction key list - preferably, this is the same value for all key lists. In the basic case, the LTC value can simply be increased with the time step. This can eventually be reset, but this will not need to be done for a significant time - a 30-minute time step allows for 17,568 time-based LTC values per year, with a 15-minute time step providing for twice this number, but if 2-3 bytes are available for this value, no reset would be required for multiple years.

This is sufficient for the basic case. However, when considering an extended case, there is more to be managed and further control may be needed to determine the key list to be used - this can be done using date control. Risks otherwise arise from lack of synchronization as key lists rotate. Using date control - which can be coded using two bits - a further indication of generation time can be provided (in particular, whether there was generation before or after such a key list rotation) to ensure that the correct key list is used at the time of validation. The following processes can be used on generation and validation:
- Process for "Date Control" on Generation
   - Use UTC date of generation as input
      - Compute number of days between YYMM01 (where YYMM is the static expiry date used as baseline) and the generation date (YYMMDD)
      - Compute (MOD 4) on number of days and carry result using 2 bits = Date Control
- Process for "Date Control" on Validation
   - Use UTC date of validation as input for expiry date analysis
      - Use "Date Control" (MOD 4) to validate consistency between validation date (UTC) and recovered generation date (UTC)
      - Deterministic process to retrieve generation date prior to any validation of dynamic CVC2 (= crypto validation)

This works with no need for a retry process for Validation.

A cryptographic process for use in embodiments of the disclosure will now be described, indicating the available inputs and the challenges involved in developing a suitable cryptographic process. A specific solution for use in embodiments of the disclosure will then be described.

In existing NODES implementations, cryptographic inputs are set out in a JSON structure "cryptoin" used for the cryptographic process for generation and validation of credentials. The basic input types are as follows:
- formatVersion
- auth
- keylist
- transaction
- transactionData

In this time-based use case, these can be handled in the following way, but as will be described, this may not be sufficient to deliver desired performance. formatVersion is a static parameter identifying the format in which information is provided to the process. auth here is represented by the server-side token associated with the transaction. keylist is as it says, but in the context of this use case it needs to be determined by something other than data carried in the transaction flow. transaction is a transaction identifier, here represented by the time-based LTC equivalent value. transactionData is a payload (and in the context of transactions of this type, may simply be empty).

This type of model works effectively in standard use cases, where it is effective to perform a single cryptographic validation for a given transaction (using for example a keyed-hash function such as HMAC-SHA256 or HMAC-SM3). In this use case, it is not so efficient, as it is necessary to validate all the possible candidate values in the identified "validation window" of TS i-1 to TS i+2. It would be strongly desirable to find a way to do this that did not require a call to the cryptographic engine for every candidate time step.

It is desirable to explore the base position - for example, using TOTP or HOTP standards - to understand this problem further, before considering the solution employed in embodiments of the disclosure. In TOTP, a counter C is used which is a time function, so there is a guarantee that the counter value will increase. A hash-based approach (HOTP) is typically used to implement TOTP - typically, an HMAC function with a 20 byte output (the relevant RFC defines HMAC-SHA-1, but HMAC-SHA256 or HMAC-SHA512 could be employed), with a decimalisation process using the rightmost nibble (0-F) used to determine the start point (0-15) for selection of 4 bytes.

This is as illustrated in Figure 11. The 31 rightmost bits are considered for conversion to a number with modulo 10^Digit reduction - if 6 digits are to be used for conversion, a MOD operation using 10⁶ would be used. Leftward padding with zero values is used. In most cases, a 6 or 8 digit number is obtained for a password - in our case, only 3 digits are required. The disadvantage of this approach is that each HMAC computation requires its own call to the cryptographic engine, and that it is not well adapted to handle a candidate list without a retry process - n candidates would typically require n cryptograms, and n calls to the cryptographic engine.

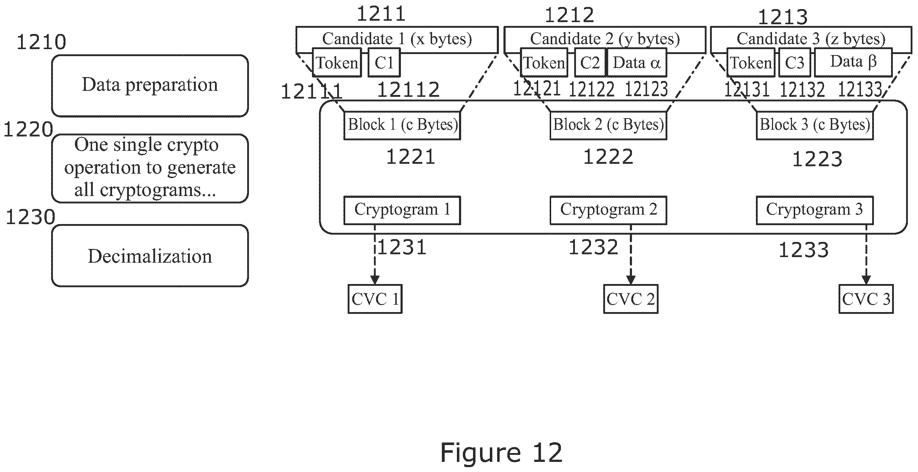

Figure 12 shows an approach that addresses this issue, following the approach described more generally in Figure 1B. Instead of using one HMAC call for each cryptogram, embodiments of the disclosure use an approach that allows one call to produce several cryptograms. To achieve this, the data needs to be prepared 1210 to provide the candidates as discrete blocks. The cryptographic function is then performed 1220 - this cryptographic function needs to not chain the list of blocks in performing the cryptographic process. This can then be followed by an appropriate decimalization process 1230 to identify the discrete cryptograms. After this, it will typically be straightforward to identify the correct cryptogram and time step.

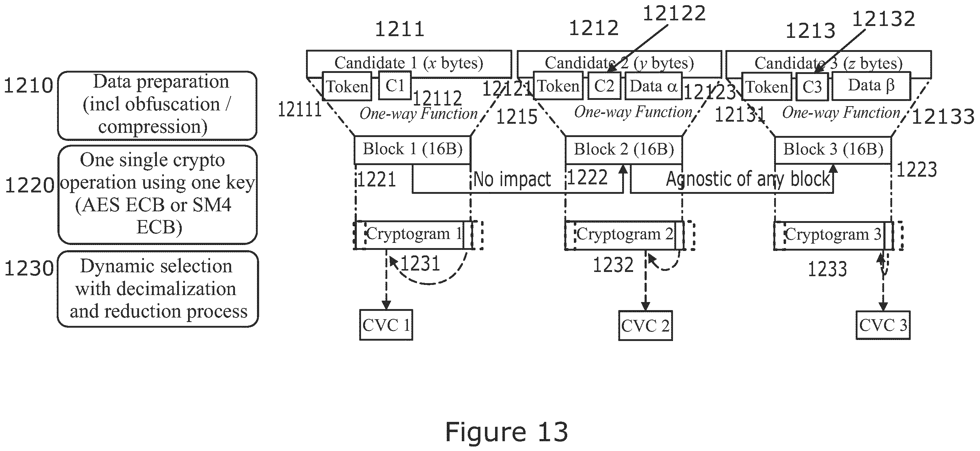

Figure 13 addresses this approach in more detail. The first step is to provide each candidate 1211, 1212, 1213 in a consistent form (this form will need also to be used for the original generation of the credential). The goal is to create n bytes of data using a deterministic process from the relevant inputs (token 12111, 12121, 12131, time-based counter 12112, 12122, 12132, and any other fields 12123, 12133 used in the relevant protocol). This data should cover what is needed for generation and validation - such as key list identification or a key list seal (these will be known within the transaction system, but are not public information). This can be followed by an obfuscation/compression step using a one-way function 1215 - this can be a standard hash such as SHA-256 - to achieve a 32-byte value. This can be reduced to 16 bytes using a simple process such as application of an XOR function (for example, XOR of the 16 leftmost bytes with the 16 rightmost bytes). This reduces each candidate - which may have started as a variable number of bytes - to a 16 byte block in a predictable and consistent way. In the arrangement shown in Figure 13, this is shown as part of the validation process, though this process will also take place during the generation process.

In the validation process, each candidate is now presented as a 16-byte block 1221, 1222, 1223. Now one cryptographic operation 1220- for example, AES ECB or SM4 ECB - can be carried out using a single key and if the blocks 1221, 1222, 1223 are not chained this results in a discrete credential generated for each block. A similar decimalisation and reduction process can be used as described above in Figure 11 to obtain the credential values, after which a matching process can be used to determine if the supplied CVC has a match with one of the computed values. As only a 3-digit value is required, only 2 bytes are needed. This can be determined as 0x**** converted to decimal value before applying modulo 10^3. As for the HOTP approach described above, dynamic selection is used with the value of rightmost nibble used as start value.

In a NODES embodiment, bytes 15 and 16 may need to be selected - with one nibble (0-F) the leftmost byte can be used to extend the cryptogram value to cover this case.

The use of obfuscation in connection with embodiments using a dynamic expiry date will now be described in more detail. As noted above, the basic embodiment uses the CVC as its only dynamic element - the static token expiry date is used - with a consequence being that only one transaction credential can be effectively generated per time step. To go beyond this (while retaining replay detection and avoiding retries) requires use of a dynamic expiry date.

An effective dynamic expiry date will be recognized by the transaction systems as valid, but it will not be confusable with a static expiry date. A preferred process will enable the two values to be distinguished from each other deterministically. There are situations in which either value may be required - say, for example, where a customer initiates a transaction (a CIT), but that card values are retained on file so that a merchant can initiate a transaction on the customer's behalf without active customer involvement (an MIT). The static value must be used for such an MIT, but the dynamic value would preferably have been used for the CIT.

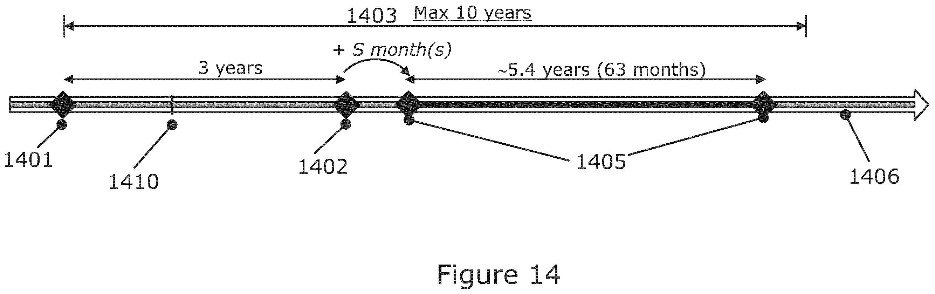

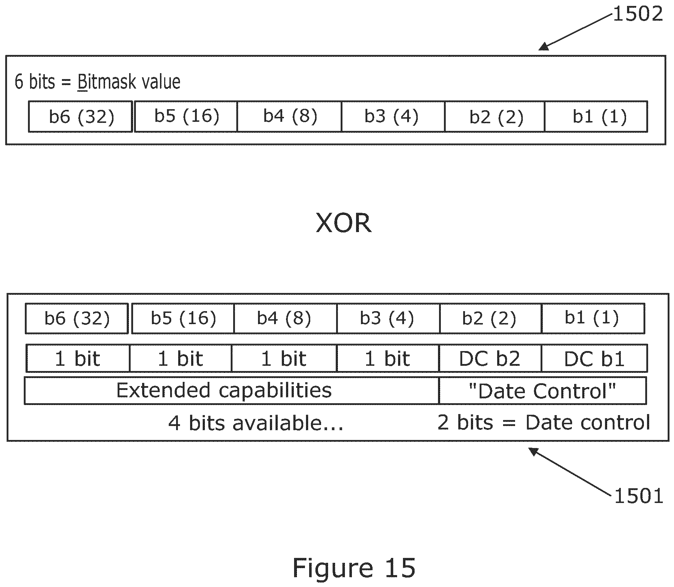

A suitable process for determining a dynamic expiry date to satisfy these requirements is set out with reference to Figures 14 and 15. Figure 14 shows a way in which the static expiry date and the dynamic expiry date can be separated. The token issuance date 1401 will typically determine the token static expiry date 1402 - as shown in Figure 14, this is typically a 3-year token lifetime. Here we show a transaction 1410 - specifically a generation of transaction credentials for a tokenized transaction - taking place during the period of validity of the token. While the actual token static expiry date 1402 is 3 years, a transaction system will typically recognize a significantly later expiry date as being potentially valid - here this expiry date range 1403 runs up to 10 years after the token issuance date 1401. This leaves a significant number of dates that can be used as dynamic expiry dates that will not be confused with the (or any) static expiry date, while still being recognized as potentially valid token expiry dates. This is achieved by imposing a shift gap 1204 of S months between the token static expiry date 1402 and a start of a dynamic expiry date range 1405. This dynamic expiry date range runs for 63 months after the shift gap ends, leaving a value of 0-63 that can be carried by the expiry date field. After this period there is an illegal value range 1406 where the dynamic expiry date cannot lie.

As noted, this gives 64 possible values to use in the token dynamic expiry date - the YYMM value of the dynamic expiry date is the YYMM value of the static expiry date, plus the shift gap (values of between 1 and 20 months are possible here), plus an xx month value where xx is a decimal value between 0 and 63 computed using 6 bits of data.

Figure 15 illustrates how this can be determined. First of all, the 6 bits of data to be included 1501 are determined according to the principles discussed above (or otherwise). Here, this involves 4 bits for "extended capabilities", allowing for multiple cryptograms to be generated in a time step, and 2 bits for date control. Obfuscation is achieved by using a mask 1502, with the specific mask to be used stored in an obfuscation table under the Luhn number of the token. The mask 1502 is then XORed with the extended data 1501, the use of an XOR function allowing the data to be recovered when the correct mask is used.

Basic and extended strategies for time-based credential management using a decentralized architecture for credential generation and validation have been described above. The basic strategy allows for a single CVC cryptogram to be handled per time step, with a static expiry date. This requires control of the node and the key list used for generation and validation, with a relatively long lived key list. The extended strategy uses both a CVC cryptogram and a dynamic expiry date. This is a much more flexible approach, allowing for additional transactions per time step and improved node and key list management - care is however needed to distinguish cases requiring a static expiry date (such as MIT transactions) from ones using a dynamic expiry date (as an initial CIT transaction will do).

As the skilled person will appreciate, these strategies can be developed further. Error management here is logically focused on replay detection, which can be achieved using a security counter managed by the validating node - a token security counter can be used to track both validation error and validation success. It is possible to develop this approach further for extended collision management - generally this may be achieved by providing simple and efficient processes for the generating and validating nodes to follow, while using token security counters and an associated set of rules to manage collisions and other failure cases.

As the skilled person will appreciate, the embodiments described above are exemplary, and further embodiments falling within the spirit and scope of the disclosure may be developed by the skilled person working from the principles and examples set out above.

## Claims

1. A method of authorising a transaction using a payment network, comprising:
determining a token for the transaction associated with a payment account;
at a node in the payment network, establishing a succession of time steps,;
performing the transaction using the token and obtaining a dynamic transaction credential from the node in the payment network, where the dynamic transaction credential is determined by the time step in which the dynamic transaction credential is generated; and
providing the transaction to the payment network for authorisation, wherein the dynamic transaction credential is validated in the payment network by determining the time step in which the dynamic transaction credential was generated.

2. The method of claim 1, wherein a duration of a time step is a fixed value optionally between 15 minutes and 30 minutes.

3. The method of claim 1 or claim 2, wherein the dynamic transaction credential is a card verification code.

4. The method of any preceding claim, wherein the dynamic transaction credential is obtained by a cryptographic process using a cryptographic key, wherein the cryptographic key is selected from a key list using a deterministic process using an input derived from the token, optionally a Luhn code of the token.

5. The method of any preceding claim, further comprising obtaining an additional dynamic transaction credential comprising a dynamic expiry date, wherein the dynamic expiry date comprises encoded information and has a value determined not to conflict with a value of a static expiry date of the token.

6. The method of claim 5 where dependent on claim 4, wherein the encoded information comprises one or more of a node identifier for the node where the dynamic transaction credential was generated, a key list identifier for the key list used to generate the dynamic transaction credential, and a date control field and optionally wherein a predetermined mask is used to obfuscate the value of the encoded information.

7. A method of validating a credential using a cryptographic process, wherein the credential is one of a plurality of credentials generated, wherein each credential generated is associated with a value in a sequence;
identifying a plurality of candidate values in the sequence such that one of the candidate values will be the one of the candidate values associated with the credential to be validated;
obtaining information needed to generate the credential for each of the plurality of identified candidate values in the sequence;
using a single cryptographic process, generating the credential for each of the candidate values in the sequence; and
determining which of the candidate value credentials is the credential to be validated, and validating that credential.

8. The method of claim 10, wherein the sequence comprises a plurality of time steps, and wherein the value in a sequence is a value of a time step.

9. The method of claim 8 or claim 9, wherein after obtaining information needed to generate the credential for each of the plurality of identified candidate values in the sequence, the information for each identified candidate value is provided as a block of predetermined size using a predetermined one-way process.

10. The method of claim 9, wherein the single cryptographic process comprises a block cipher in which the blocks are not chained, optionally the block cipher is adapted to support ECB mode, and optionally the block cipher is one of AES ECB and SM4 ECB.

11. The method of claim 9 or claim 10 where dependent on claim 8, wherein the information for each candidate value comprises a token performing the transaction and a counter value derived from the time step value.

12. The method of any of claims 1 to 6, wherein validating the dynamic transaction credential comprises validating a credential according to the method of any of claims 7 to 11 where dependent on claim 8.

13. The method of claim 12, wherein generation of the dynamic transaction credential comprises the same cryptographic process as determining the credential for a single candidate value of the plurality of identified candidate values.

14. A computer system comprising one or more processors and memories, wherein the computer system is programmed to perform the steps performed by a node of a payment network in one or more of claims 1 to 13.

15. The computer system of claim 14, the computer system further comprising one or more hardware security modules storing cryptographic keys for use by the computer system.
